# EUROPEAN PATENT SPECIFICATION

(11) **EP 3 462 033 B1**
(45) Date of publication and mention of the grant of the patent: **25.10.2023**
(21) Application number: 18195404.1
(22) Date of filing: 19.09.2018
(51) Int. Cl.: F04D 15/02, G01N 17/04, F01D 21/00

(54) **METHOD OF PROVIDING MONITORING OF EROSION AND/OR CORROSION IN A MACHINE AND MACHINE**
VERFAHREN ZUR ÜBERWACHUNG DER EROSION UND/ODER KORROSION IN EINER MASCHINE UND MASCHINE
PROCÉDÉ PERMETTANT D'ASSURER LA SURVEILLANCE DE L'ÉROSION ET/OU DE LA CORROSION DANS UNE MACHINE ET MACHINE

(30) Priority: 28.09.2017 IT 201700108888
(43) Date of publication of application: 03.04.2019
(73) Proprietor: Nuovo Pignone Tecnologie - S.r.l., 50127 Florence (IT)
(72) Inventor: MOCHI, Gianni, 50127 Florence (IT); TEMPESTINI, Massimiliano, 50127 Florence (IT); STRINGANO, Giuseppe, 50127 Florence (IT); BETTI, Alessandro, 50127 Florence (IT)
(74) Representative: Novagraaf Group

(56) References cited:
- EP-A1- 0 039 750
- EP-A1- 0 150 552
- GB-A- 1 499 550
- JP-A- 05 118 204
- US-A- 5 297 940
- US-A1- 2013 089 463
- US-A1- 2016 091 411

## Description

### TECHNICAL FIELD

Embodiments of the subject matter disclosed herein correspond to methods of providing monitoring of erosion and/or corrosion in a machine and machines embodying such methods.

### BACKGROUND ART

US-A-2013/0089463 discloses an erosion sensor including a conductive element comprising a metallic foil, one or more fibre optic wires or a conductive polymer. JPH-A-05118204 discloses a high temperature corrosion monitor for a gas turbine. GB-A-1499550 discloses monitoring erosive wear of gas turbine blades.

Erosion and corrosion are serious problems in machines. Turbomachines, in particular centrifugal compressors, are particularly susceptible to erosion and corrosion as they may lead to damages to the components of the machines.

In the field of "Oil & Gas", erosion and corrosion are even more serious problems as plants need to be fully operative and fully efficient.

Typically, in order to avoid damages due to erosion and/or corrosion, components of a machine that are likely to be eroded and/or corroded are frequently checked and replaced (if necessary).

Such maintenance requires to stop the machine so its downtime is increased.

Furthermore, such maintenance is effective if erosion and/or corrosion occur as expected.

If some unexpected erosion and/or corrosion occur, damages may result despite the maintenance.

It is desirable to improve the prior art as far as erosion and corrosion are concerned.

### SUMMARY

This is achieved by monitoring precisely erosion and/or corrosion in a machine through a sensor that is eroded and/or corroded by a working fluid of the machine in the same or similar way and/or at the same or similar rate as a part of the machine to be monitored.

The probe is electrically coupled to a telemetry system in order to first transfer erosion and/or corrosion data detected by the probe and then use them so to avoid damages to the machines.

First embodiments of the subject matter disclosed herein relate to a method of providing monitoring of erosion and/or corrosion of a part of a stator or a rotor in a machine as defined in claim 1, such as erosion and/or corrosion to a rotor or a stator of a turbomachine, for example a centrifugal compressor.

Second embodiments of the subject matter disclosed herein relate to a machine as defined in claim 9, such as a turbomachine.

### BRIEF DESCRIPTION OF DRAWINGS

The accompanying drawings, which are incorporated herein and constitute an integral part of the present specification, illustrate exemplary embodiments of the present invention and, together with the detailed description, explain these embodiments. In the drawings:
Fig. 1 shows schematically an embodiment of a machine, such as but not limited to a centrifugal compressor, associated with an electronic unit monitoring erosion and corrosion of the machine,
Fig. 2 shows a partial enlarged cross-section view of the embodiment of Fig. 1,
Fig. 3 shows schematically a first embodiment of a probe comprising a measurement element / electrode made of a core material,
Fig. 4 shows schematically a second embodiment of a probe comprising a measurement element / electrode made of a core material and a coating material, and
Fig. 5 shows schematically a third embodiment of a probe comprising a measurement element / electrode made of a coating material.

### DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

When a machine operates, a working fluid of the machine may erode and/or corrode its parts exposed to the working fluid due to the temperature and/or the pressure and/or the content of the working fluid, including liquid droplets and/or solid particles. Some parts may be eroded and/or corroded more than other parts.

Corrosion and/or erosion progress during operation of the machine, and the parts interested to the phenomena may be progressively damaged. This may result in reduced performance of the machine or, even worse, in a breakage of the machine.

When a part is damaged, it must be replaced. This requires stopping the machine and disassembling it, replacing the part, assembling the machine and starting it again.

Therefore, it is desirable to wait till when such maintenance operation is really necessary, but avoiding any risk of breakage of the machine.

Centrifugal compressors are particularly susceptible to erosion and corrosion especially those used in the field of "Oil & Gas". Furthermore, downtime of an "Oil & Gas" plant for a maintenance operation costs a lot of money, even more a repair operation.

A new way to monitor how quickly a rotor or a stator of a machine corrodes or erodes during use has been discovered. Unlike the prior, manual-based inspections described in the background section above, which required stopping the machine to visually look for corrosion and/or erosion of blades and other parts, a new and useful way of detecting, monitoring and measuring, in real time, or near real time, how much parts of the machine corrode and/or erode during use has been discovered that is a significant scientific and engineering step forward.

At its simplest, a turbomachine has a stationary assembly of parts called a "stator" and a rotating assembly of parts called a "rotor". The rotor, which may have several blades, turns around a central axis, and by turning pushes or pulls a fluid, which can be gas or liquid or a mixture thereof, through the turbomachine. If the turbomachine is a compressor, the turning rotor compresses the fluid to a higher pressure. If the turbomachine is a pump, the turning rotor pushes or pulls the fluid through the turbomachine. The stator surrounds the rotor so that the fluid flows through the turbomachine inside channels defined between the rotor and the stator. In other words, a portion of the rotor (including its blades) or the stator can be said to be a "part configured to be exposed to a working fluid to be processed".

It has been discovered that a probe can be embedded into, or formed within, a material that forms the rotor or the stator. The probe may be configured to detect, measure and monitor corrosion of material that forms the rotor or the stator. The same probe, or a different one may be configured to detect, measure and monitor erosion of the material that forms the rotor or the stator. It has also been discovered that the probes can be formed of the same material that forms the rotor, or the stator which means the portion of the probe exposed the working fluid can be expected to erode (or corrode) in the same or similar way and/or at the same or similar rate as portions of rotor or stator material exposed the working fluid.

When the probe(s) are coupled magnetically, electromagnetically, or via conduits (wires) formed and/or placed within the rotor, and/or the stator, to a telemetry system, then analog or digital signals output from the probe(s) can be received and processed by a local or remote computer processor to detect, measure and monitor corrosion and/or erosion of the parts of the turbomachine in which the probe(s) are embedded.

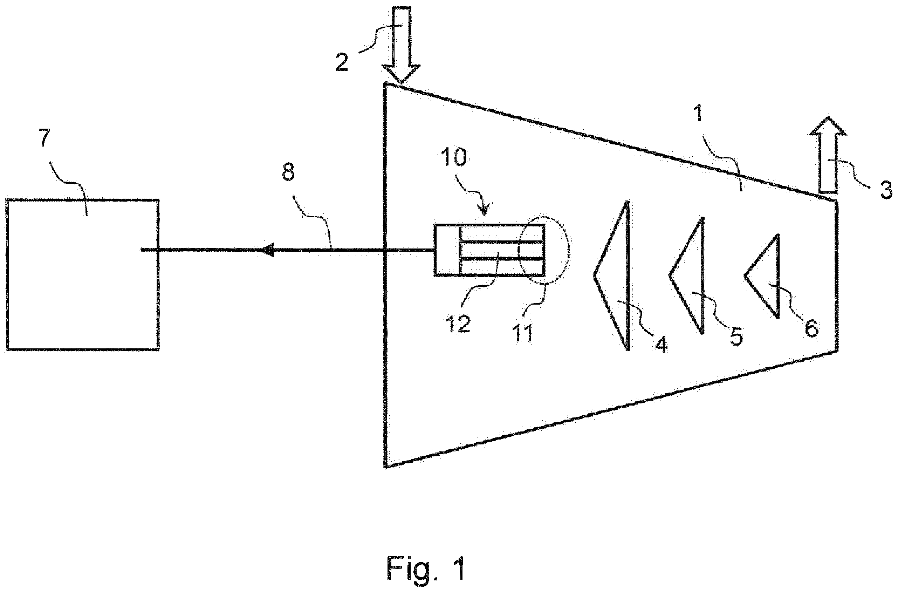

Referring to Fig. 1, there is a centrifugal compressor 1 associated with an electronic unit 7 monitoring erosion and corrosion of the centrifugal compressor 1, more specifically compressor 1 is electrically connected to unit 7 through electrical connections 8 (in general, a set of electric wires). According to alternative embodiments, the electronic unit monitors only erosion or only corrosion. In general, an electronic unit associated to a compressor carries out several functions, including monitoring functions and controlling functions.

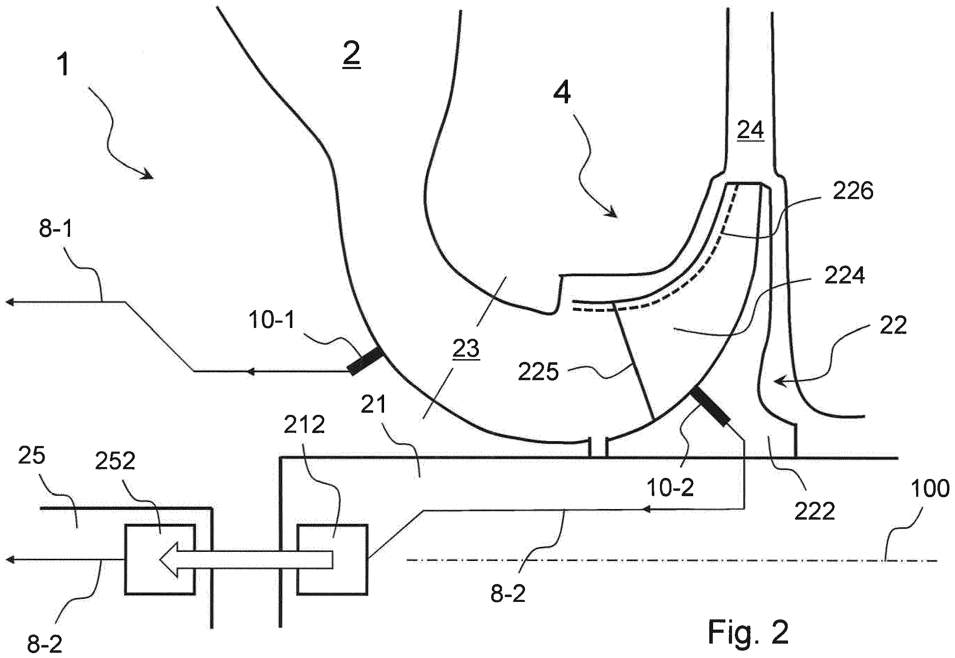

Fig. 1 shows only one monitoring probe 10 inside compressor 1 to make it simpler. Anyway, as in the embodiment of Fig. 1 both erosion and corrosion are monitored, at least two probes are integrated into compressor 1 (see probes 10-1 and 10-2 in Fig. 2). The wires of electrical connections are connected to the probes; for example in Fig. 1, some of the wires of electrical connections 8 are connected to probe 10.

Probes for measuring erosion (i.e. loss of material due to mechanical effects) are manufactured and sold for example by ROXAR; they are Electrical Resistance (ER) probes and detect increase of electrical resistance over time; they comprise an internal metal electrode that may be called "measurement element" and an external metal envelope.

Probes for measuring corrosion (i.e. loss of material due to chemical effects) are manufactured and sold for example by CORR INSTRUMENTS; they are Coupled Multielectrode Array Sensor (CMAS) probes and detect increase of electrical resistance over time; they comprise a set of internal metal electrodes that may be called "measurement elements" and an external metal envelope.

In Fig. 1, compressor 1 has at least one inlet 2 for a working fluid, precisely a working fluid in uncompressed status (i.e. low pressure), and at least one outlet 3 for the working fluid, precisely a working fluid in compressed status (i.e. high pressure).

As shown in Fig. 1, compressor 1 includes three compression stages fluidly connected in series: a first compression stage 4, at least one intermediate compression stage 5 and a last compression stage 6. In Fig. 1, each of the three compression stages is shown as a triangle being a suitable symbol for its impeller.

In order to monitor erosion or corrosion of a part (for example, an impeller of stage 4 of compressor 1) exposed to a working fluid to be compressed in a centrifugal compressor (for example, compressor 1), an erosion or corrosion probe (for example, probe 10) is provided and is positioned so to be exposed to the same working fluid.

The part (for example, an impeller of stage 4 of compressor 1) comprises a material, in particular a metal material, and the probe (for example, probe 10) comprises a measurement element (for example, element 12) that is exposed to the same working fluid and that comprises the same material. Erosion or corrosion of the probe (for example, probe 10), more precisely of the measurement element (for example, element 12), occurs mainly or only on its head (for example, element 11).

Thanks to the use of the same material, the erosion or corrosion measured by the probe is identical to or almost identical to the erosion or corrosion that occurs on the part of the compressor of interest, typically a part of the compressor that is likely to be eroded or corroded. In order to have the two erosions or corrosions more similar, the conditions (for example, pressure, temperature, composition, speed, acceleration, etc.) of the working fluid acting on the probe should be similar to or identical with the conditions of the working fluid acting on the part.

Maintaining similar conditions between the probe and the part of interest in the compressor is important because if the part of the centrifugal compressor is relatively large and subject to the same working fluid in different conditions (for example, pressure, temperature, composition, speed, acceleration, etc.), erosion or corrosion will vary from region to region of the part - this is true for example for an impeller. Therefore, the or each probe should preferably be positioned so to monitor those region(s) of the part that are more likely to be subject to erosion or/and corrosion.

If a probe is positioned close to the part or to the region of the part of interest, the working fluid conditions are very similar or identical.

Anyway, it may be difficult to position a probe close to the part or to the region of the part of interest.

If a probe is positioned distant from the part or from the region of the part of interest, the position of the probe should be chosen so that the working fluid conditions are sufficiently similar.

A probe may be positioned in a component of a rotor of the machine, for example a centrifugal compressor, or in a component of a stator of the machine, for example a centrifugal compressor. In general, if the probe is positioned in a component of a rotor, it will be more difficult to deliver measures to the electronic unit; anyway, such positioning may be advantageous from the measurement accuracy point of view.

The head of a probe may be advantageously positioned in an internal region of the machine, for example a centrifugal compressor, where the working fluid is subject to considerable change in the flowing direction.

The head of a probe may be advantageously positioned in an internal region of the machine, for example a centrifugal compressor, where condensation of the working fluid is likely to occur.

A part of a centrifugal compressor of particular interest as far as erosion or corrosion is concerned is an impeller of the centrifugal compressor, in particular an impeller (22 in Fig. 2) of a first compression stage (4 in Fig. 2). Blades, in particular leading edges of blades, are eroded and stub regions, in particular their initial portions, are eroded and corroded.

Embodiments of the present invention differ, for example, in terms of number of probes and type of probes: there may be one or more erosion probes and/or one or more corrosion probes. For example, in the embodiment of Fig. 2, probe 10-1 may be a corrosion probe and probe 10-2 may be an erosion probe. For example, in the embodiment of Fig. 2, a corrosion probe is distant from an erosion probe; in other embodiments, a corrosion probe is close to an erosion probe.

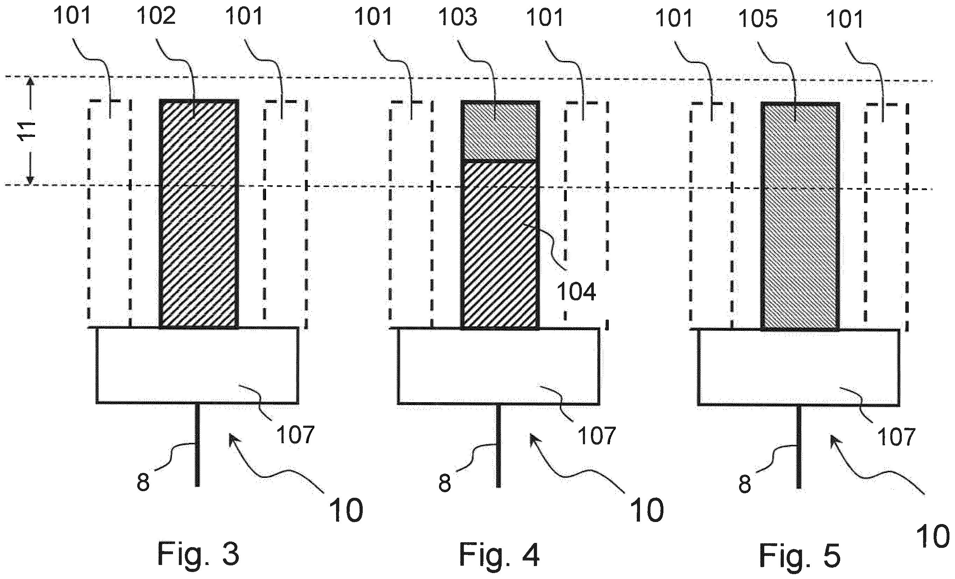

Figures 3-5 show three embodiments of probes 10 connected to some (for example two) of the wires of electrical connections 8; their heads (that is primarily subject to erosion / corrosion) is labelled 11. They comprise an internal metal electrode that may be called "measurement element", 102 or 103+104 or 105, and an external metal envelope 101.

According to a first embodiment (Fig. 3), the whole measurement element 102 is made of the same core material of the part of interest; this core material may be for example carbon steel; in this case, it is assumed that the part of interest is entirely made of a core material. Erosion/corrosion of such probe reflects exactly the part of interest. By continuously or repeatedly analyzing the measurements deriving from such probe it is possible to decide when carrying out a maintenance operation.

According to a second embodiment (Fig. 4), the tip 103 of the measurement element is made of the same coating material of the part of interest, and the rest 104 of the measurement element is made of the same core material of the part of interest; this core material may be for example carbon steel and this coating material may be for example stainless steel; in this case, it is assumed that the part of interest is made of a core material and is coated by a coating material. Erosion/corrosion of such probe reflects exactly the part of interest. By continuously or repeatedly analyzing the measurements deriving from such probe it is possible to decide when carrying out a maintenance operation.

According to a first embodiment (Fig. 5), the whole measurement element 105 is made of the same coating material of the part of interest; this coating material may be for example stainless steel; in this case, it is assumed that the part of interest is made of a core material and is coated by a coating material. Erosion/corrosion of such probe reflects erosion/corrosion of the coating of the part of interest. By continuously or repeatedly analyzing the measurements deriving from such probe it is possible to determine when the coating of the part of interest is no longer present and to decide when carrying out a maintenance operation.

It is to be noted that in figures 3-5 there is a box 107 that represents schematically any other component (for example electronic components) of probe 10.

The methodological technical teachings just described may be advantageously used in centrifugal compressors or even in other kinds of machines, in particular turbomachines.

As already said, the centrifugal compressor 1 of Fig. 1 and Fig. 2 is an example of application of some of such methodological technical teachings.

Fig. 1 has already been described.

In the following, Fig. 2 will be described.

In Fig. 2, inlet 2 and first compression stage 4 of centrifugal compressor 1 are shown.

Compression stage 4 comprises an impeller 22 fixedly mounted on a shaft 21 arranged to rotate around a rotation axis 100.

According to this embodiment, compressor 1 comprises three compression stages 4, 5, 6 (see Fig. 1) and therefore three impellers; only one of them is shown in Fig. 2.

Impeller 22 comprises a stub 222 through which the impeller 22 is mounted on the shaft 21, and a plurality of blades 224. Impeller 22 may be unshrouded or shrouded; in the latter case, impeller 22 comprises also a shroud 226 that is shown as a dashed line in the figure. In the figure, the leading edge of blades 224 is labelled 225.

The inlet of impeller 22 is in fluid communication with a suction plenum 23 of the compressor 1 that in turn is in fluid communication with inlet 2 of compressor 1.

The outlet of impeller 22 is in fluid communication with a return channel 24 of compressor 1.

There is a first probe 10-1 located at inlet 2 of the compressor 1, in particular facing an impeller 22, more in particular at suction plenum 23; the head (see e.g. reference 11 in Fig. 1) of probe 10-1 faces the working fluid flowing inside the compressor, in particular inside suction plenum 23. Probe 10-1 is located in a component of the stator (i.e. suction plenum 23) of the compressor. Probe 10-1 measures for example corrosion; it may be used to monitor corrosion close to its head or distant from its head.

There is a second probe 10-2 located at impeller 22, in particular at its stub 222; the head (see e.g. reference 11 in Fig. 1) of probe 10-2 faces the working fluid flowing inside the compressor, in particular inside impeller 22. Probe 10-2 is located in a component of the rotor (i.e. impeller 22) of the compressor. Probe 10-2 measures for example erosion; it may be used to monitor erosion close to its head or distant from its head. As compressor 1 comprises other impellers, other erosion probes similar to probe 10-2 may be present in the compressor.

Probe 10-1 and/or probe 10-2 may be identical or similar to the probe of Fig. 3 or the probe of Fig. 4 or the probe of Fig. 5. The material of the measurement element of probe 10-1 or probe 10-2 is preferably selected according to the material of the part or the region of the part of the compressor affected by erosion or corrosion.

Electric signals corresponding to measurements carried out by probe 10-1 are transmitted to an electronic unit (for example unit 7 in Fig. 1) via electric wires 8-1.

Electric signals corresponding to measurements carried out by probe 10-2 are transmitted to an electronic unit (for example unit 7 in Fig. 1) via electric wires 8-2.

Particularly (but not only) in the case of probe 10-2, that is located inside a component of the rotor of the compressor, use of a telemetry system is advantageous. The telemetry system may comprise a transmission unit 212 and a reception unit 252. The transmission unit 212 is mounted to / integrated in for example shaft 21 of the compressor; a first length of wires 8-2 connects directly probe 10-2 to unit 212 and is located inside shaft 21. The reception unit 252 is mounted to / integrated in for example a specific assembly 25 of the compressor; a second length of wires 8-2 connects directly unit 252 to an electronic unit (for example unit 7 in Fig. 1). In the example of Fig. 2, both units 212 and 252 are positioned centrally with respect to axis 100 so that the distance between them remains constant and may be very small, for example 1-10 mm or even less.

## Claims

1. A method of providing monitoring of erosion and/or corrosion of a part (22) of a stator or a rotor in a machine (1), wherein the part (22) is arranged so as to be exposed to a working fluid to be processed by the machine (1), wherein the part (22) comprises a material, the method comprising the step of:
- positioning a corrosion probe (10) and/or an erosion probe (10) so as to be exposed to said working fluid,
wherein the corrosion probe (10) and/or the erosion probe (10) comprises a measurement element (12) that is arranged so as to be exposed to said working fluid and that comprises said material,
**characterized in that** the corrosion probe (10) and/or the erosion probe (10) is formed within said material that forms the rotor or the stator.

2. The method of claim 1, wherein said part (22) is an impeller of a turbomachine (1).

3. The method of claim 1, wherein said part (22) is an impeller of a centrifugal compressor (1).

4. The method of claim 1, wherein said part (22) is an impeller of a first compression stage (4) of a centrifugal compressor (1).

5. The method of claim 1 or 2 or 3 or 4, wherein the corrosion probe (10) and/or the erosion probe (10) is positioned in a component (222) of a rotor of the machine (1) or a component (23) of a stator of the machine (1).

6. The method of any of the preceding claims, wherein a head (11) of the corrosion probe (10) and/or the erosion probe (10) is positioned in an internal region of the machine (1) where the working fluid is subject to considerable change in the flowing direction.

7. The method of any of the preceding claims, wherein a head (11) of the corrosion probe (10) and/or the erosion probe (10) is positioned in an internal region of the centrifugal compressor (1) where condensation of the working fluid is likely to occur.

8. The method of any of the preceding claims, comprising the step of positioning at least one corrosion probe and at least one erosion probe.

9. A machine (1) comprising:
- a part (22) of a stator or a rotor arranged to be exposed to a working fluid to be processed by the machine (1), wherein the part (22) comprises a material,
and
- a corrosion probe (10) and/or an erosion probe (10) positioned so as to be exposed to said working fluid,
wherein the corrosion probe (10) and/or the erosion probe (10) comprises a measurement element (12) that is arranged so as to be exposed to said working fluid and that comprises said material,
**characterized in that** the corrosion probe (10) and/or the erosion probe (10) is formed within said material that forms the rotor or the stator.

10. The machine (1) of claim 9, wherein a head (11) of the corrosion probe (10) and/or the erosion probe (10) is located at an inlet of the machine (1) and faces a first impeller (22) of the machine (1).

11. The machine (1) of claim 10, wherein the head (11) of the corrosion probe (10) and/or the erosion probe (10) is located at a suction plenum (23) of the machine (1).

12. The machine (1) of claim 9, wherein a head (11) of the corrosion probe (10) and/or the erosion probe (10) is located at an inlet of an impeller (22) of the machine (1).

13. The machine (1) of claim 12, wherein the head (11) of the corrosion probe (10) and/or the erosion probe (10) is located at a stub (222) of an impeller (22) of the machine (1) and close to a leading edge (225) of a blade (224) of the impeller (22).

14. The machine (1) of claim 12 or 13, wherein the corrosion probe (10) and/or the erosion probe (10) is electrically connected to first ends of wires (8) located inside and along a shaft (21) of the machine (1).

15. The machine (1) of any of the preceding claims from 9 to 14, wherein the corrosion probe (10) and/or the erosion probe (10) is electrically coupled to a transmission unit (212) of a telemetry system (212, 252).

## Patentansprüche

1. Verfahren zum Bereitstellen von Überwachung einer Erosion und/oder Korrosion eines Teils (22) eines Stators oder eines Rotors in einer Maschine (1), wobei das Teil (22) angeordnet ist, um einem Arbeitsfluid ausgesetzt zu sein, das durch die Maschine (1) zu verarbeiten ist, wobei das Teil (22) ein Material umfasst, das Verfahren umfassend den Schritt:
- Positionieren einer Korrosionssonde (10) und/oder einer Erosionssonde (10), um dem Arbeitsfluid ausgesetzt zu sein,
wobei die Korrosionssonde (10) und/oder die Erosionssonde (10) ein Messelement (12) umfasst, das angeordnet ist, um dem Arbeitsfluid ausgesetzt zu sein, und das das Material umfasst,
**dadurch gekennzeichnet, dass** die Korrosionssonde (10) und/oder die Erosionssonde (10) innerhalb des Materials ausgebildet ist, das den Rotor oder den Stator ausbildet.

2. Verfahren nach Anspruch 1, wobei das Teil (22) ein Laufrad einer Turbomaschine (1) ist.

3. Verfahren nach Anspruch 1, wobei das Teil (22) ein Laufrad eines Radialverdichters (1) ist.

4. Verfahren nach Anspruch 1, wobei das Teil (22) ein Laufrad einer ersten Verdichtungsstufe (4) eines Radialverdichters (1) ist.

5. Verfahren nach Anspruch 1 oder 2 oder 3 oder 4, wobei die Korrosionssonde (10) und/oder die Erosionssonde (10) in einer Komponente (222) eines Rotors der Maschine (1) oder einer Komponente (23) eines Stators der Maschine (1) positioniert ist.

6. Verfahren nach einem der vorstehenden Ansprüche, wobei ein Kopf (11) der Korrosionssonde (10) und/oder der Erosionssonde (10) in einem inneren Bereich der Maschine (1) positioniert ist, in dem das Arbeitsfluid einer erheblichen Änderung der Fließrichtung unterliegt.

7. Verfahren nach einem der vorstehenden Ansprüche, wobei ein Kopf (11) der Korrosionssonde (10) und/oder der Erosionssonde (10) in einem inneren Bereich des Radialverdichters (1) positioniert ist, in dem eine Kondensation des Arbeitsfluids wahrscheinlich auftritt.

8. Verfahren nach einem der vorstehenden Ansprüche, umfassend den Schritt eines Positionierens mindestens einer Korrosionssonde und mindestens einer Erosionssonde.

9. Maschine (1), umfassend:
- ein Teil (22) eines Stators oder eines Rotors, das angeordnet ist, um einem Arbeitsfluid ausgesetzt zu sein, das durch die Maschine (1) zu verarbeiten ist, wobei das Teil (22) ein Material umfasst,
und
- eine Korrosionssonde (10) und/oder eine Erosionssonde (10), die positioniert ist, um dem Arbeitsfluid ausgesetzt zu sein,
wobei die Korrosionssonde (10) und/oder die Erosionssonde (10) ein Messelement (12) umfasst, das angeordnet ist, um dem Arbeitsfluid ausgesetzt zu sein, und das das Material umfasst,
**dadurch gekennzeichnet, dass** die Korrosionssonde (10) und/oder die Erosionssonde (10) innerhalb des Materials ausgebildet ist, das den Rotor oder den Stator ausbildet.

10. Maschine (1) nach Anspruch 9, wobei sich ein Kopf (11) der Korrosionssonde (10) und/oder der Erosionssonde (10) an einem Einlass der Maschine (1) befindet und einem ersten Laufrad (22) der Maschine (1) zugewandt ist.

11. Maschine (1) nach Anspruch 10, wobei sich der Kopf (11) der Korrosionssonde (10) und/oder der Erosionssonde (10) an einem Saugplenum (23) der Maschine (1) befindet.

12. Maschine (1) nach Anspruch 9, wobei sich ein Kopf (11) der Korrosionssonde (10) und/oder der Erosionssonde (10) an einem Einlass eines Laufrads (22) der Maschine (1) befindet.

13. Maschine (1) nach Anspruch 12, wobei sich der Kopf (11) der Korrosionssonde (10) und/oder der Erosionssonde (10) an einem Stumpf (222) eines Laufrads (22) der Maschine (1) und nahe einer Vorderkante (225) einer Schaufel (224) des Laufrads (22) befindet.

14. Maschine (1) nach Anspruch 12 oder 13, wobei die Korrosionssonde (10) und/oder die Erosionssonde (10) mit ersten Enden von Drähten (8) elektrisch verbunden ist, die sich in und entlang einer Welle (21) der Maschine (1) befinden.

15. Maschine (1) nach einem der vorstehenden Ansprüche 9 bis 14, wobei die Korrosionssonde (10) und/oder die Erosionssonde (10) mit einer Übertragungseinheit (212) eines Telemetriesystems (212, 252) elektrisch gekoppelt ist.

## Revendications

1. Procédé permettant d'assurer une surveillance de l'érosion et/ou de la corrosion d'une partie (22) d'un stator ou d'un rotor dans une machine (1), dans lequel la partie (22) est agencée de manière à être exposée à un fluide de travail à traiter par la machine (1), dans lequel la partie (22) comprend un matériau, le procédé comprenant l'étape consistant à :
- positionner une sonde de corrosion (10) et/ou une sonde d'érosion (10) de manière à être exposées audit fluide de travail,
dans lequel la sonde de corrosion (10) et/ou la sonde d'érosion (10) comprennent un élément de mesure (12) qui est agencé de manière à être exposé audit fluide de travail et qui comprend ledit matériau,
**caractérisé en ce que** la sonde de corrosion (10) et/ou la sonde d'érosion (10) sont formées à l'intérieur dudit matériau qui forme le rotor ou le stator.

2. Procédé selon la revendication 1, dans lequel ladite partie (22) est une turbine d'une turbomachine (1).

3. Procédé selon la revendication 1, dans lequel ladite partie (22) est une turbine d'un compresseur centrifuge (1).

4. Procédé selon la revendication 1, dans lequel ladite partie (22) est une turbine d'un premier étage de compression (4) d'un compresseur centrifuge (1).

5. Procédé selon la revendication 1 ou 2 ou 3 ou 4, dans lequel la sonde de corrosion (10) et/ou la sonde d'érosion (10) sont positionnées dans un composant (222) d'un rotor de la machine (1) ou un composant (23) d'un stator de la machine (1).

6. Procédé selon l'une quelconque des revendications précédentes, dans lequel une tête (11) de la sonde de corrosion (10) et/ou de la sonde d'érosion (10) est positionnée dans une région interne de la machine (1) où le fluide de travail est soumis à un changement considérable dans la direction d'écoulement.

7. Procédé selon l'une quelconque des revendications précédentes, dans lequel une tête (11) de la sonde de corrosion (10) et/ou de la sonde d'érosion (10) est positionnée dans une région interne du compresseur centrifuge (1) où la condensation du fluide de travail est susceptible de se produire.

8. Procédé selon l'une quelconque des revendications précédentes, comprenant l'étape consistant à positionner au moins une sonde de corrosion et au moins une sonde d'érosion.

9. Machine (1), comprenant :
- une partie (22) d'un stator ou d'un rotor agencée pour être exposée à un fluide de travail à traiter par la machine (1), dans lequel la partie (22) comprend un matériau,
et
- une sonde de corrosion (10) et/ou une sonde d'érosion (10) positionnées de manière à être exposées audit fluide de travail,
dans laquelle la sonde de corrosion (10) et/ou la sonde d'érosion (10) comprennent un élément de mesure (12) qui est agencé de manière à être exposé audit fluide de travail et qui comprend ledit matériau,
**caractérisée en ce que** la sonde de corrosion (10) et/ou la sonde d'érosion (10) sont formées à l'intérieur dudit matériau qui forme le rotor ou le stator.

10. Machine (1) selon la revendication 9, dans laquelle une tête (11) de la sonde de corrosion (10) et/ou de la sonde d'érosion (10) est située au niveau d'une entrée de la machine (1) et fait face à une première turbine (22) de la machine (1).

11. Machine (1) selon la revendication 10, dans laquelle la tête (11) de la sonde de corrosion (10) et/ou de la sonde d'érosion (10) est située au niveau d'un plénum d'aspiration (23) de la machine (1).

12. Machine (1) selon la revendication 9, dans laquelle une tête (11) de la sonde de corrosion (10) et/ou de la sonde d'érosion (10) est située au niveau d'une entrée d'une turbine (22) de la machine (1).

13. Machine (1) selon la revendication 12, dans laquelle la tête (11) de la sonde de corrosion (10) et/ou de la sonde d'érosion (10) est située au niveau d'un talon (222) d'une turbine (22) de la machine (1) et à proximité d'un bord d'attaque (225) d'une pale (224) de la turbine (22).

14. Machine (1) selon la revendication 12 ou 13, dans laquelle la sonde de corrosion (10) et/ou la sonde d'érosion (10) sont connectées électriquement à de premières extrémités de fils (8) situées à l'intérieur et le long d'un arbre (21) de la machine (1).

15. Machine (1) selon l'une quelconque des revendications précédentes 9 à 14, dans laquelle la sonde de corrosion (10) et/ou la sonde d'érosion (10) sont couplées électriquement à une unité de transmission (212) d'un système de télémétrie (212, 252).
